# FASCICULE DE BREVET EUROPEEN

(11) **EP 2 285 675 B1**
(45) Date de publication et mention de la délivrance du brevet: **07.11.2012**
(21) Numéro de dépôt: 09769485.5
(22) Date de dépôt: 28.05.2009
(51) Int. Cl.: B64C 25/10, B64C 25/26

(54) **ATTERRISSEUR AVANT D'AERONEF**
FLUGZEUGBUGFAHRWERK
AIRCRAFT NOSE LANDING GEAR

(30) Priorité: 29.05.2008 FR 0853523
(43) Date de publication de la demande: 23.02.2011
(73) Titulaire: Airbus Operations, 31060 Toulouse Cédex (FR)
(72) Inventeur: REYNES, Didier, F-31200 Toulouse (FR)
(74) Mandataire: Ilgart, Jean-Christophe
(86) Numéro de dépôt international: PCT/FR2009/050993
(87) Numéro de publication internationale: WO 2009/156644

(56) Documents cités:
- DE-B- 1 194 266
- FR-A- 2 875 475
- US-A- 2 661 171
- US-A- 3 198 461

## Description

### DOMAINE TECHNIQUE

L'invention concerne un atterrisseur avant d'aéronef comprenant entre autres :
- une jambe de train apte à être montée pivotante sur une structure de l'aéronef entre une position rentrée et une position sortie ;
- un vérin de relevage qui agit sur la jambe de train pour la faire passer de sa position rentrée à sa position sortie et inversement,
- une contrefiche qui maintient la jambe de train dans sa position sortie ;
- un boîtier d'accrochage qui accroche la jambe de train et la maintient dans sa position rentrée ;
- une commande en mode de fonctionnement normal du boîtier d'accrochage ;
- une commande en mode de secours du boîtier d'accrochage.

Un atterrisseur avant rétractable d'aéronef est généralement composé des éléments principaux suivants :
- une jambe de train qui comporte l'amortisseur et les roues ;
- une contrefiche qui sert à maintenir la jambe de train dans sa position déployée lorsque le train est en position sortie ;
- un vérin de relevage qui assure les manoeuvres du train à savoir la rentrée et la sortie du train ;
- un boîtier d'accrochage qui permet de maintenir l'atterrisseur en position rétractée lorsque celui-ci doit être stocké dans son logement en-dehors des phases de décollage, d'atterrissage et de roulage au sol de l'appareil.

Un tel atterisseur est connu de DE1194266, qui représente l'art antérieur le plus proche

Le boîtier d'accrochage est équipé de deux systèmes de commande, l'un pour le mode de fonctionnement normal et l'autre pour le fonctionnement de secours. La commande est généralement hydraulique pour le mode de fonctionnement normal et mécanique pour le mode de secours.

Afin de faciliter les connexions avec ces systèmes de commande, le boîtier d'accrochage est installé selon l'art antérieur, sur la structure de l'appareil. En effet, si le boîtier était intégré sur un élément du train d'atterrissage ces commandes, particulièrement la commande mécanique, devraient suivre les mouvements de l'élément du train d'atterrissage concerné. Cela compliquerait leur conception et leur installation et augmenterait leur masse.

L'installation d'un atterrisseur avant dans la structure d'un aéronef est donc réalisée à travers un grand nombre de points d'interface, par exemple six. Ces points d'interface représentent autant de points d'introduction d'effort. Ces points d'introduction d'effort nécessitent des renforcements de la structure de l'aéronef et se traduisent par une masse supplémentaire associée à cette structure. De plus, les points d'interface se traduisent par des points à définir entre le fabricant du train d'atterrissage et celui de la structure de l'appareil ainsi que du volume des pièces à gérer car certains points sont très proches les uns des autres. Enfin, les points d'interface se traduisent par autant de liaisons à réaliser lors du montage ou du démontage de l'atterrisseur.

La présente demande concerne un atterisseur avant d'aéronef tel que défini par les caractéristiques techniques de la revendication 1.

Ces problèmes sont résolus, conformément à l'invention, par le fait que l'atterrisseur comporte quatre points d'introduction d'effort avec la structure de l'aéronef à savoir deux points pour le pivotement de la jambe de train sur la structure de l'aéronef et deux points pour le pivotement de la contrefiche sur la structure de l'aéronef.

Grâce à ces caractéristiques, on réduit au minimum les points d'interface de l'atterrisseur avec la structure de l'appareil. Par conséquent, on gagne en masse par la réduction du nombre de points d'introduction d'effort avec la structure de l'appareil, tout en simplifiant les connexions avec le système de commande ce qui a globalement pour conséquence une simplification de l'installation de l'atterrisseur dans cette structure.

Avantageusement, le vérin de relevage est fixé, à l'une de ses extrémités, sur la jambe de train, et à son autre extrémité, sur la contrefiche.

Avantageusement, le boîtier d'accrochage est monté sur la contrefiche.

Dans une réalisation préférée, la commande en mode de secours du boîtier d'accrochage est électrique.

Dans une autre réalisation, la commande en mode de secours du boîtier d'accrochage est hydraulique.

La commande en mode de fonctionnement normal du boîtier d'accrochage peut être hydraulique ou électrique. De même, le vérin de relevage de la jambe de train peut être hydraulique ou électrique.

D'autres caractéristiques et avantages de l'invention apparaîtront encore à la lecture de la description qui suit, d'un exemple de réalisation donné à titre illustratif en référence aux figures annexées. Sur ces figures :
- la figure 1 représente un atterrisseur conforme à l'art antérieur en position sortie ;
- la figure 2 représente une vue de l'atterrisseur de l'art antérieur en position rentrée ;
- la figure 3 représente une vue schématique du boîtier d'accrochage conforme à l'art antérieur ;
- la figure 4 représente un atterrisseur conforme à la présente invention position sortie ;
- la figure 5 représente l'atterrisseur de la figure 4 en position rentrée.

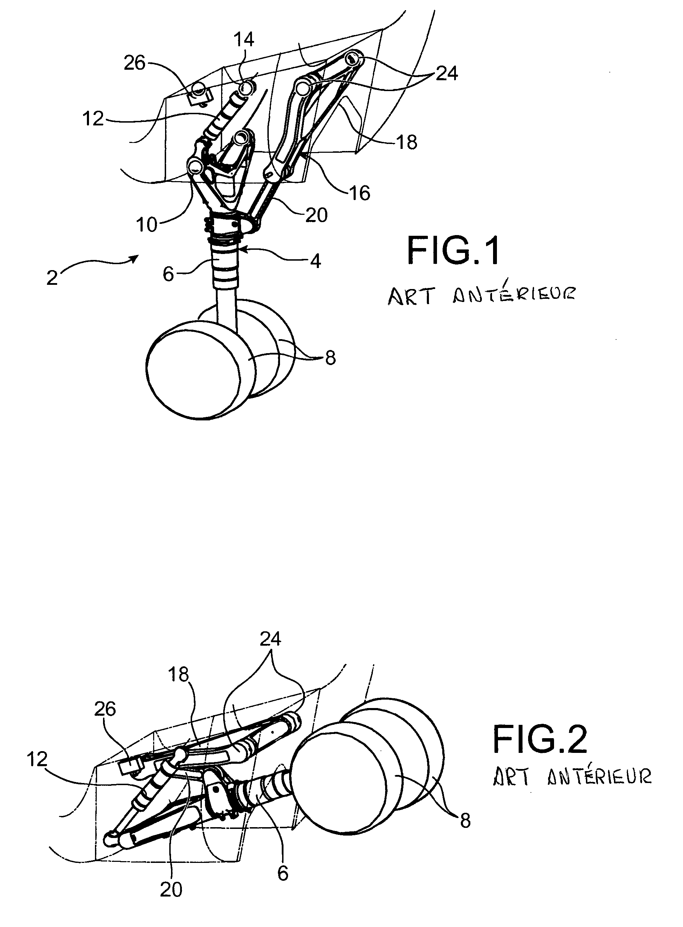

On a représenté sur la figure 1, un atterrisseur, désigné par la référence générale 2, conforme à l'art antérieur en position sortie. Cet atterrisseur comporte tout d'abord une jambe de train 4, comportant un amortisseur 6 et deux roues 8.

La jambe de train est montée pivotante sur la structure de l'aéronef autour de deux points de fixation 10. Un vérin 12 monté à une extrémité sur la jambe de train et à une autre extrémité à un point de fixation 14 sur la structure de l'aéronef permet de faire passer la jambe de train de la position sortie représentée sur la figure 1 à la position rentrée représentée sur la figure 2 et réciproquement.

L'atterrisseur comporte d'autre part une contrefiche 16. Cette contrefiche est constituée d'une structure en triangle 18 et d'une barre 20 montée à une extrémité sur la structure en triangle et à son autre extrémité sur la jambe de train. La barre 20 et la structure en triangle 18 sont montées pivotantes autour d'un axe 22. La structure en triangle 18 est montée pivotante sur la structure de l'aéronef autour de deux points de fixation 24.

Enfin, l'atterrisseur comporte un boîtier d'accrochage 26 qui permet de maintenir l'atterrisseur en position rétractée lorsque celui-ci doit être stocké dans son logement en-dehors des phases de décollage, d'atterrissage et de roulage au sol de l'appareil.

On a représenté sur la figure 2 le train d'atterrissage de la figure 1 en position rétractée. Sur cette figure le vérin 12 présente une longueur maximale de manière à faire remonter les roues 8 à l'intérieur d'un logement formé dans la structure de l'aéronef. La structure triangulaire 18 et la barre 20 sont repliées l'une sur l'autre. Une extrémité de la structure triangulaire 18 est accrochée au boîtier d'accrochage 26.

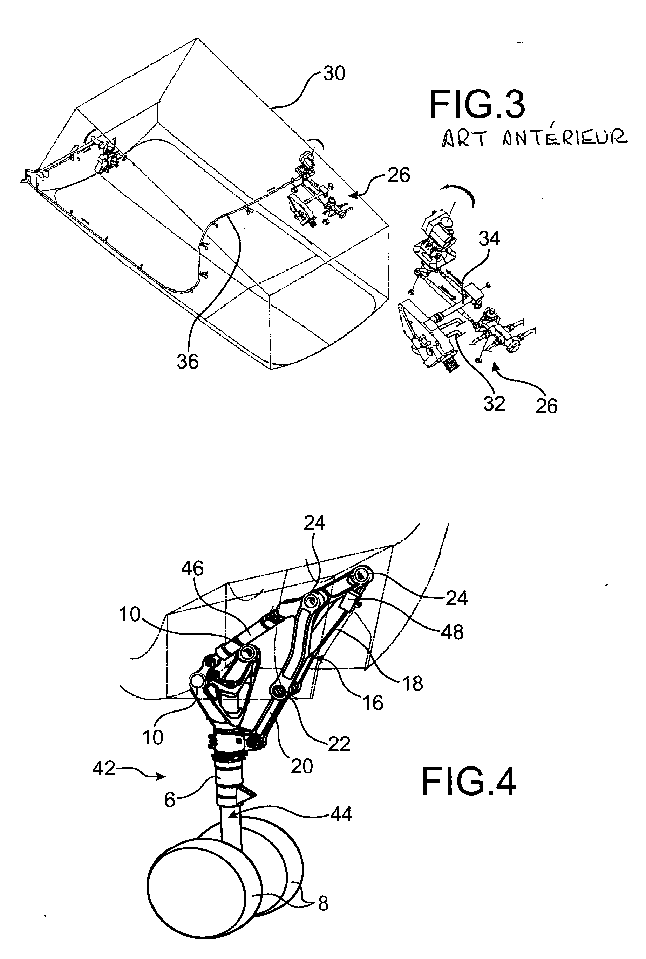

On a représenté sur la figure 3, une vue du logement du train d'atterrissage équipé du boîtier d'accrochage 26. Par souci de simplification le train d'atterrissage n'a pas été représenté sur cette figure. Le boitier d'accrochage, conformément à l'art antérieur comporte une commande hydraulique 32 pour le mode de fonctionnement normal et une commande mécanique 34 pour le fonctionnement de secours. La commande mécanique est par exemple actionnée par un arbre de torsion commandé par une bielle elle-même commandée par un actionneur commandé depuis le poste de pilotage de l'avion. Comme on le remarque le boîtier d'accrochage 26 est installé sur la structure de l'appareil, à savoir l'une des faces du logement 30. En effet, si le boîtier de commande 26 était installé sur un élément du train d'atterrissage, ces commandes mécaniques devraient suivre les mouvements de cet élément lors de la rentrée et de la sortie du train d'atterrissage, il en résulterait une grande complication du système ainsi qu'une augmentation de la masse.

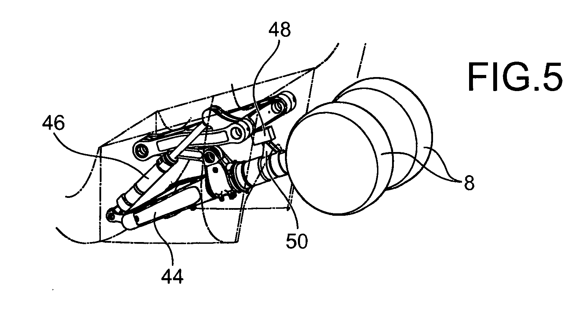

On a représenté sur la figure 4 un train d'atterrissage conforme à la présente invention en position déployée. Celui-ci comporte, comme le train d'atterrissage de l'art antérieur, un amortisseur 6 et deux roues 8. Il est monté pivotant autour de point de fixation 10 sur la structure de l'aéronef. Un vérin 46 permet de faire passer la jambe de train 44 de la position sortie qu'elle occupe sur la figure 4 à la position rentrée qu'elle occupe sur la figure 5. Le vérin 46 est fixé à l'une de ses extrémités, à la jambe de train 44 et, à son autre extrémité, à la structure triangulaire 18. De cette manière on supprime le point d'articulation, référencé 14 sur la figure 1, du vérin 12 sur la structure de l'aéronef. D'autre part, le boîtier d'accrochage 48 est fixé sur la structure triangulaire 18. On supprime par là-même le point de fixation référencé 26 sur la figure 1 du boîtier d'accrochage sur la structure de l'appareil.

On a représenté sur la figure 5, l'atterrisseur de la figure 4 en position rentrée. Sur cette figure le vérin 46 est en position déployée au maximum afin de faire rentrer les roues 8 dans le logement 30 prévu dans la structure de l'appareil. La jambe de train 44 est accrochée en 50 au boîtier d'accrochage 48 fixé sur la structure triangulaire 18.

On remarque que l'atterrisseur représenté sur les figures 4 et 5 permet de minimiser les interfaces avec la structure de l'appareil et donc de réduire les points d'introduction des efforts avec cette structure ce qui permet d'aboutir à une solution globale plus légère et plus simple.

Pour que ceci puisse être aisément réalisé, conformément à l'invention, le mode de secours du boîtier d'accrochage est de préférence électrique ou éventuellement hydraulique. De même le vérin de relevage 46 peut être hydraulique ou électrique. Le mode normal de fonctionnement du boîtier d'accrochage peut être également hydraulique ou électrique. Toutes les combinaisons possibles d'actionnement hydraulique ou électrique sont possibles.

La configuration la plus optimum est la configuration dans laquelle le mode normal de fonctionnement du boîtier d'accrochage, le mode de secours du boîtier d'accrochage et le vérin de relevage ont un fonctionnement électrique. En effet, il n'y a plus qu'un type de connexion entre l'atterrisseur et la structure de l'appareil. Cette connexion est plus flexible à définir et à installer qu'une connexion de type hydraulique ou éventuellement mécanique. De plus, pour la dépose ou la repose du vérin de relevage il n'y a pas d'intervention sur le circuit hydraulique de l'appareil comme la purge du circuit pour éliminer l'air présent éventuellement dans le circuit ainsi que la mise à niveau du liquide.

## Revendications

1. Atterrisseur avant d'aéronef comprenant :
- une jambe de train (44) apte à être montée pivotante sur une structure (30) de l'aéronef entre une position rentrée et une position sortie ;
- un vérin de relevage (46) qui agit sur la jambe de train (44) pour la faire passer de sa position rentrée à sa position sortie et inversement ;
- une contrefiche (16) qui maintient la jambe de train (44) dans sa position sortie ;
- un boîtier d'accrochage (48) qui accroche la jambe de train (44) et qui la maintient dans sa position rentrée ;
- une commande en mode de fonctionnement normal du boîtier d'accrochage (48) ;
- une commande en mode de secours du boîtier d'accrochage (48), qui comporte quatre points d'introduction d'effort (10, 24) avec la structure de l'aéronef (30), à savoir deux points pour le pivotement de la jambe de train (10) sur la structure (30) de l'aéronef et deux points (24) pour le pivotement de la contrefiche (16) sur la structure de l'aéronef, et dont le vérin de relevage (46) est fixé, à l'une de ses extrémités, sur la jambe de train (44) et à son autre extrémité sur la contrefiche (16), le boîtier d'accrochage étant monté sur la contrefiche.

2. Atterrisseur selon la revendication 1, **caractérisé en ce que** la commande de secours du boîtier d'accrochage (48) est électrique.

3. Atterrisseur selon l'une quelconque des revendications 1 ou 2, **caractérisé en ce que** la commande en mode de secours du boîtier d'accrochage est hydraulique.

4. Atterrisseur selon l'une des revendications 1 à 3, **caractérisé en ce que** la commande en mode de fonctionnement normal du boîtier d'accrochage (48) est hydraulique ou électrique.

5. Atterrisseur selon l'une des revendications 1 à 4, **caractérisé en ce que** le vérin de relevage (46) de la jambe de train (44) est hydraulique ou électrique.

## Claims

1. A front aircraft landing gear comprising:
- a landing gear leg (44) able to be pivotably mounted on a structure (30) of the aircraft between a retracted position and an extended position;
- an actuating cylinder (46) moving the landing gear leg (44) from the retracted position to the extended position and vice versa,
- a strut (16) that maintains the landing gear leg (44) in the extended position thereof;
- an uplock housing (48) that catches the landing gear leg (44) and maintains it in the retracted position thereof;
- an uplock housing (48) normal operating mode control;
- an unlock housing (48) backup operating mode control, that comprises four stress-adding points (10, 24) for adding stress to the aircraft structure (30), namely two points for the pivotal movement of the landing gear leg (10) on the aircraft structure (30) and two points (24) for the pivotal movement of the strut (16) on the aircraft structure, and of which the actuating cylinder (46) is fastened, at one of its ends, on the landing gear leg (44), and at its other end on the strut (16), the uplock housing (48) being mounted on the strut (16).

2. The landing gear according to claim 1, **characterized in that** the uplock housing (48) backup control is electric.

3. The landing gear according to one of claims 1 or 2, **characterized in that** the uplock housing (48) backup control is hydraulic.

4. The landing gear according to one of claims 1 to 3, **characterized in that** the uplock housing (48) normal operating control is hydraulic or electric.

5. The landing gear according to one of claims 1 to 4, **characterized in that** the actuating cylinder (46) of the landing gear (44) is hydraulic or electric

## Patentansprüche

1. Bugfahrwerk eines Luftfahrzeugs, umfassend:
- ein Fahrwerkbein (44), das geeignet ist, zwischen einer Einfahrstellung und einer Ausfahrstellung schwenkbar an einer Struktur (30) des Luftfahrzeugs angebracht zu sein;
- einen Einfahrzylinder (46), der auf das Fahrwerkbein (44) derart einwirkt, dass dieses von dessen Einfahrstellung in dessen Ausfahrstellung und umgekehrt gelangt;
- eine Gegenstrebe (16), die das Fahrwerkbeins. (44) in dessen Ausfahrstellung hält;
- eine Verriegelung (48), die das Fahrwerkbein (44) befestigt und dieses in dessen Einfahrstellung hält;
- eine Steuerung der Verriegelung (48) im Normalbetrieb;
- eine Steuerung der Verriegelung (48)im Notbetrieb, die vier Punkte der Einwirkung einer Kraft (10, 24) auf die Struktur des Luftfahrzeugs (30), d.h. zwei Punkte für das Schwenken des Fahrwerkbeins (10) an der Struktur (30) des Luftfahrzeugs und zwei Punkte (24) für das Schwenken der Gegenstrebe (16) an der Struktur des Luftfahrzeugs, aufweist, und wobei der Einfahrzylinder (46) an dem einen von dessen Enden an dem Fahrwerkbein (44) befestigt ist und an dessen anderem Ende an der Gegenstrebe (16) befestigt ist, wobei die Verriegelung an der Gegenstrebe angebracht ist.

2. Fahrwerk nach Anspruch 1, **dadurch gekennzeichnet, dass** die Notsteuerung der Verriegelung (48) elektrisch ist.

3. Fahrwerk nach einem der Ansprüche 1 oder 2, **dadurch gekennzeichnet, dass** die Steuerung der Verriegelung im Notbetrieb hydraulisch ist.

4. Fahrwerk nach einem der Ansprüche 1 bis 3, **dadurch gekennzeichnet, dass** die Steuerung der Verriegelung (48) im Normalbetrieb hydraulisch oder elektrisch ist.

5. Fahrwerk nach einem der Ansprüche 1 bis 4, **dadurch gekennzeichnet, dass** der Einfahrzylinder (46) des Fahrwerkbeins (44) hydraulisch oder elektrisch ist.
